## Europäisches Patentamt
## European Patent Office
## Office européen des brevets

(19)

(11) Numéro de publication: **0 007 512**
**B1**

(12) **FASCICULE DE BREVET EUROPEEN**

(45) Date de publication du fascicule du brevet: **31.03.82**

(51) Int. Cl.³: **B 23 B 51/02**

(21) Numéro de dépôt: **79102362.5**

(22) Date de dépôt: **10.07.79**

(54) Foret à plaquettes de coupe amovibles.

(30) Priorité: **01.08.78 CH 8208/78**
**21.05.79 CH 4733/79**

(43) Date de publication de la demande:
**06.02.80 Bulletin 80/3**

(45) Mention de la délivrance du brevet:
**31.03.82 Bulletin 82/13**

(84) Etats contractants désignés:
**DE FR GB**

(56) Documents cités:
**GB - A - 1 029 476**

**WERKSTATT UND BETRIEB, vol. 110,
septembre 1977, n° 9, publié par Carl Hanser
Verlag,
München
"Kurzbohrer mit Hartmetall-Wendeplatten an
Stelle HSS-Spiralbohrer"
Page 616**

(73) Titulaire: **STELLRAM S.A.**
**Route de l'Etraz**
**CH-1260 Nyon, Vaud (CH)**

(72) Inventeur: **Gehri, Hermann**
**CH-1197 Prangins, Vaud (CH)**

(74) Mandataire: **Micheli, Michel Pierre et al,**
**MICHELI & CIE 118, Rue du Rhône Case Postale
47**
**CH-1211 Geneve 6 (CH)**

EP 0 007 512 B1

Courier Press, Leamington Spa, England.

# Foret à plaquettes de coupe amovibles

La présente invention se rapporte à un foret à plaquettes de coupe amovibles, pour matériaux métalliques ou non métalliques, qui comporte au moins deux plaquettes de coupe fixées de façon amovible dans des logements pratiqués à son extrémité, les arêtes de coupe de ces plaquettes débouchant dans des gorges pratiquées dans le corps du foret et chacune desdites arêtes de coupe assurant, lors de la révolution de la pièce à usiner ou du foret, une partie de la surface totale de coupe de celui-ci. Par surface totale de coupe, on entend ici la surface de révolution engendrée par le mouvement relatif de rotation des arêtes de coupe de l'ensemble des plaquettes du foret et de la pièce à usiner, plus particulièrement des parties actives de ces arêtes.

On connaît déjà des forets à plaquettes de coupe amovibles du type ci-dessus, permettant de supprimer les opérations d'affûtage des arêtes, nécessaires dans le cas des forets conventionnels. Par exemple, le foret décrit dans le brevet U.S. 3.540.323 comporte deux plaquettes de même forme, généralement carrée, de mêmes dimensions et à coupe négative. Un des désavantages que présente un tel foret consiste en ce que les deux plaquettes agissent selon des forces de même direction, ce qui conduit à des déviations possibles de l'outil lors des opérations de forage. Le foret faisant l'objet du brevet français 2.334.456 présente des plaquettes rhombiques à coupe positive, alors que des plaquettes de forme triangulaire sont également utilisées sur certain forets à plaquettes amovibles disponibles commercialement. Enfin, il est décrit dans la revue Technica No. 26, pages 2062—2064, 1971, notamment un foret présentant deux plaquettes carrées, disposées de façon adjacente et dans le même plan, et une troisième plaquette également carrée disposée dans un autre plan situé radialement de l'autre côté de l'axe longitudinal.

Les forets connus précités utilisant, dans la zone de l'axe longitudinal du foret, des plaquettes à trois ou quatre côtés avec arêtes de coupe rectilignes présentent l'inconvénient d'une part de conduire à des problèmes au niveau de l'évacuation des copeaux et d'autre part de nécessiter le remplacement fréquent des plaquettes, leurs points de coupe étant relativement fragiles. Un des forets décrit dans la publication Werkstatt und Betrieb 110, No. 9, 615—618, 1977 tend à remédier à cet inconvénient particulier en prévoyant deux plaquettes de forme circulaire. Ce foret présente toutefois le même désavantage que ceux précités, à savoir que l'utilisation de plaquettes identiques sur un même foret conduit à des déviations possibles de l'outil lors des opérations de forage.

Par conséquent, l'objet de cette invention, visant à remédier aux inconvénients précités des forets connus, consiste en un foret qui comporte au moins deux plaquettes de coupe fixées de façon amovible dans des logements pratiqués à son extrémité, les arêtes de coupe de ces plaquettes débouchant dans des gorges pratiquées dans le corps du foret et chacune desdites arêtes de coupe assurant, lors de la révolution de la pièce à usiner ou du foret, une partie de la surface totale de coupe de celui-ci, et une des plaquettes présentant une arête de coupe de forme circulaire dont au moins un point est situé sur l'axe longitudinal du foret, et qui est caractérisé par le fait qu'au moins une plaquette présente une forme différente de celle des autres plaquettes.

En outre, selon une variante, une des plaquettes à arête de coupe non circulaire peut être fixée de façon amovible sur un support lui-même fixé de façon amovible dans un desdits logements, cette plaquette et ce support formant alors une cartouche interchangeable.

Les dessins annexés illustrert schématiquement et à titre d'exemple deux formes d'exécution du foret selon l'invention.

La figure 1 est une vue générale en perspective d'une première forme d'exécution.

La figure 2 est une vue de dessus du foret illustré à la figure 1, alors que les figures 3 et 4 sont des vues de côté respectivement depuis la droite et depuis la gauche de la figure 1.

La figure 5 représente une vue en coupe d'un trou borgne réalisé au moyen du foret selon la figure 1.

La figure 6 est une vue générale en perspective d'une seconde forme d'exécution.

La figure 7 est une vue de dessus du foret illustré à la figure 6, alors que la figure 8 est une vue en coupe selon la ligne VIII—VIII de la figure 7.

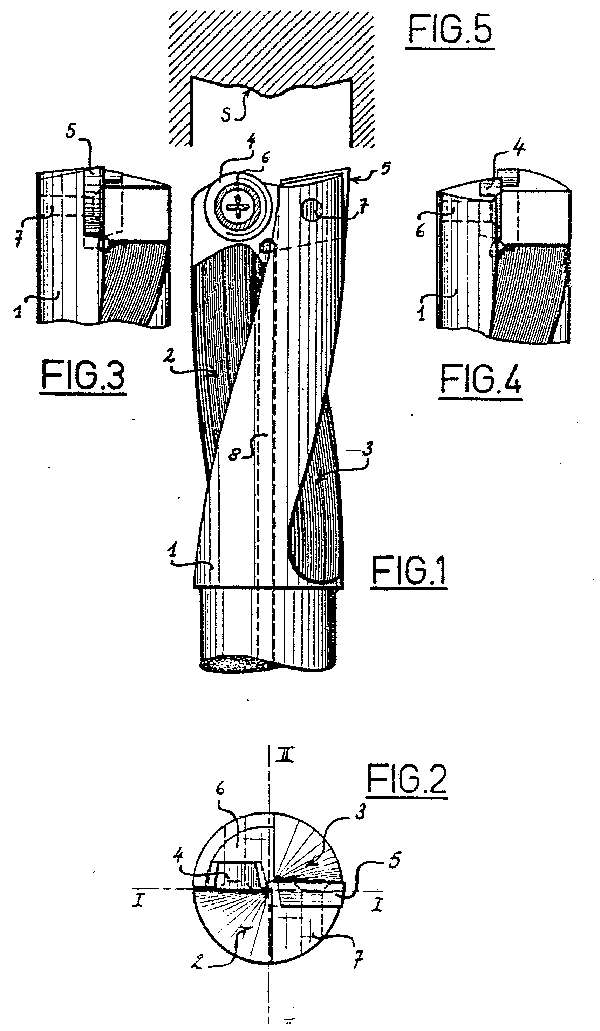

En référence d'abord aux figures 1 à 5, le foret illustré comporte un corps 1 dans lequel sont pratiquées deux gorges à copeaux hélicoïdales 2, 3 à l'extrémité de chacune desquelles est prévu, dans le corps 1 du foret, un logement destiné à recevoir une plaquette de coupe, respectivement une plaquette à arête de coupe de forme circulaire 4 (ci-après "plaquette circulaire") et une plaquette à arête de coupe de forme rhombique 5 (ci-après "plaquette rhombique"). Ces deux plaquettes 4, 5 sont chacune munies d'un orifice central et sont fixées, de façon amovible, dans leurs logements respectifs, par exemple au moyen d'une vis à tête conique 6, 7 passant dans ledit orifice.

Comme illustré sur la figure 2, l'arête de coupe circulaire de la plaquette 4 est disposée radialement dans un plan longitudinal I et de manière à couper selon deux points d'intersection le plan longitudinal II perpendiculaire au plan I, c'est-à-dire à s'étendre très légèrement au-delà de ce plan II, donc de l'axe longitudinal du foret. Quant à l'arête de coupe rhombique de la plaquette 5, elle est disposée ici dans un plan parallèle au plan I contenant l'arête de coupe circulaire de la plaquette 4, la distance entre ces deux plans parallèles étant fonction du diamètre du corps 1 du foret. De plus, la plaquette rhombique 5 est positionnée de telle sorte que sa pointe antérieure externe soit d'une part située légèrement en dehors du diamètre du corps du foret et d'autre part très légèrement en avant par rapport au point le plus en avant de l'arête de coupe circulaire de la plaquette 4, ceci afin que, lors du perçage, la plaquette rhombique 5 pénètre dans le matériau à usiner avant la plaquette circulaire 4 et trace ainsi, en vue d'un éventuel contrôle, un sillon constituant l'empreinte extérieure de la surface totale de coupe et par là du trou à forer.

Dans la forme d'exécution illustrée, la surface totale de coupe est donc la surface de révolution formée, lors de la rotation de la pièce à usiner ou du foret, d'une part par la partie de l'arête de coupe rectiligne antérieure de la plaque rhombique 5 allant de la pointe externe antérieure jusqu'à l'intersection de cette arête avec le cercle imaginaire parcouru lors du mouvement relatif de rotation du foret et de la pièce à usiner par le point le plus en avant de l'arête de coupe circulaire de la plaquette 4, ceci constituant la partie annulaire de la surface totale de coupe, et d'autre part par la portion de l'arête de coupe circulaire de la plaquette 4 située entre ledit point le plus en avant et le premier point d'intersection de cette arête circulaire avec le plan longitudinal II, ceci constituant la partie centrale de ladite surface totale de coupe.

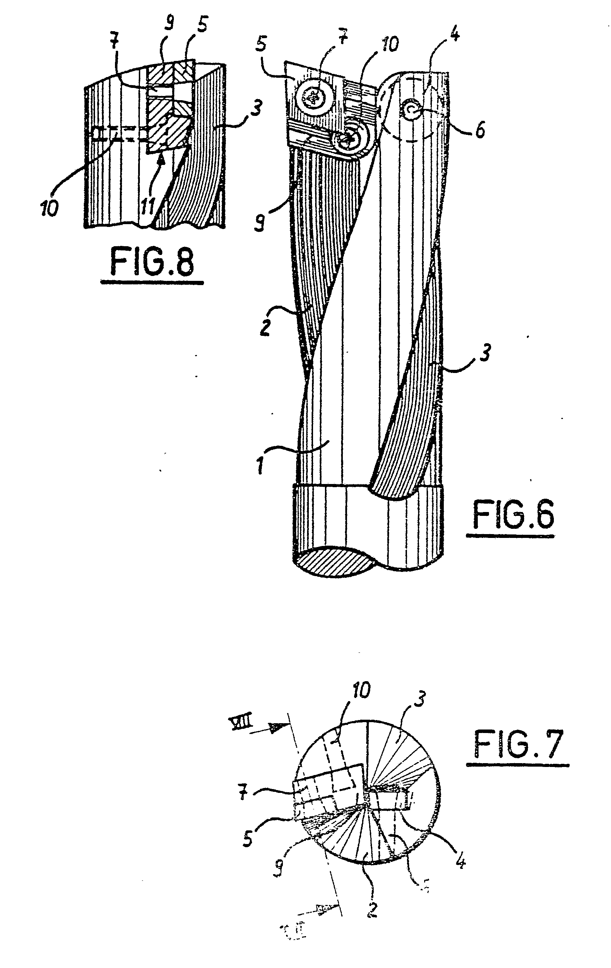

La figure 5 illustre en coupe un trou borgne percé dans une pièce en un matériau quelconque au moyen du foret tel que décrit en référence aux figures 1 à 4; la ligne S représente donc en coupe la forme du fond de ce trou et correspond à la surface totale de coupe obtenue par la rotation relative des parties actives des arêtes de coupe respectivement circulaire 4 et rhombique 5 et de la pièce.

De préférence, la plaquette circulaire 4 est dépouillée sur son pourtour de façon à pénétrer sans talonner dans le matériau à usiner, alors que la plaquette rhombique 5 présente une dépouille sur ses faces latérales.

Tant la plaquette circulaire 4 que la plaquette rhombique 5 peuvent être munies, en fonction de leurs dimensions notamment, d'un brise-copeaux obtenu par exemple par frittage ou meulage sur leur face de coupe.

En outre, la plaquette rhombique 5 peut être positionnée parallèlement à l'axe du foret ou, selon la nature du matériau à usiner, avec un angle positif ou négatif par rapport à cet axe.

Enfin, comme montré sur la figure 1, le foret illustré peut comporter un canal 8 percé selon l'axe longitudinal du foret et débouchant à proximité des deux plaquettes 4, 5. Ce canal est destiné au passage d'un liquide approprié servant au refroidissement et à la lubrification des arêtes de coupe des plaquettes, ainsi qu'à faciliter l'évacuation des copeaux formés.

En référence maintenant aux figures 6 à 8, illustrant une seconde forme d'exécution, la plaquette 4 à arête de coupe circulaire est également fixée de façon amovible au moyen de la vis 6 dans un logement calibré, usiné à l'extrémité de la gorge 2 directement dans le corps du foret 1. Par contre, la plaquette 5 à arête de coupe rhombique est fixée de façon amovible au moyen de la vis 7 dans un logement calibré, usiné dans un support 9. Ce support 9 est percé d'un orifice décentré destiné à recevoir une vis de fixation 10 coopérant en position de service avec un taraudage pratiqué dans un logement pratiqué à l'extrémité de la gorge 3 dans le corps du foret 1. Le support 9 et la plaquette de coupe 5 à arête de coupe rhombique forment donc une cartouche interchangeable.

Les parois latérales 11 du logement destiné à recevoir le support 9 forment avec le fond de ce logement un angle inférieur à 90° (voir figure 8). De même, les flancs du support 9 font avec la face d'appui de celui-ci destinée à être en contact avec le fond du logement un angle correspondant à celui précité. Ainsi, en position de service, c'est-à-dire lorsque le support 9 est fixé par la vis 10 dans le logement à parois non perpendiculaires 11, les flancs du support 9 s'appuyent contre ces parois latérales 11 afin de bloquer ce support 9 dans ledit logement.

Le foret selon l'invention peut être prévu pour des diamètres inférieurs à 20 mm aussi bien que pour des diamètres supérieurs à 60 mm. Dans le cas des grands diamètres, il est préférable d'utiliser un foret comportant plus de deux plaquettes de coupe. Selon une forme d'exécution non illustrée, un tel foret peut présenter par exemple deux plaquettes à arêtes de coupe circulaires disposées chacune radialement dans un plan longitudinal, les deux plans faisant un angle entre eux, et assurant la partie interne respectivement médiane de la surface totale de coupe du foret, et une troisième plaquette, par exemple à arête de coupe rhombique, coopérant ou non avec un support amovible pour former une cartouche interchangeable, disposée dans un plan parallèle à un plan longitudinal faisant un angle avec chacun des deux plans longitudinaux et assurant la zone extérieure de ladite surface totale de coupe du foret. Un tel foret présente donc trois gorges séparées dans lesquelles débouchent respectivement les trois arêtes de coupe.

Bien entendu, le foret selon l'invention peut présenter, outre au moins un plaquette à arête de coupe circulaire, une ou plusieurs plaquettes à arête de coupe non seulement rhombique, mais de toute autre forme appropriée et dont la combinaison avec l'arête de coupe circulaire conduit à une répartition des forces assurant un effet autocentrant.

Enfin, les plaquettes de coupe amovibles étant disposées à des distances différentes de l'axe du foret, elles ont des vitesses de coupe différentes et sont donc soumises à des forces plus ou moins importantes selon qu'elles sont plus ou moins près de cet axe. Ces plaquettes peuvent par conséquent être réalisées en métal dur de compositions différentes selon la position occupée radialement, ou en acier rapide.

Un des avantages essentiels de la présente invention réside dans le fait que, de par la présence d'une plaquette à arête de coupe circulaire, en combinaison avec une plaquette à arête de coupe rhombique par exemple, la répartition des forces agissant sur le foret lors de son utilisation est telle qu'elle fournit à celui-ci un effet autocentrant qui l'empêche de dévier de son axe pendant le forage.

En outre, l'emploi d'une ou de plusieurs plaquettes amovibles à arête de coupe circulaire présente également d'autres avantages, dont les plus importants sont les suivants:

— une plaquette à arête de coupe circulaire engendre des copeaux de volume réduit, repliés sur eux-mêmes et écrouis, ce qui facilite leur évacuation;

— l'arête de coupe circulaire ne présente pas de pointe fragile comme les arêtes de forme rhombique, carrée ou triangulaire, et elle supporte beaucoup mieux par conséquent la sollicitation mécanique de plus en plus forte rencontrée par l'arête de coupe à mesure que l'on se rapproche de l'axe du foret et que la vitesse tend vers zéro;

— l'arête de coupe circulaire ne travaillant que sur une portion de sa circonférence, elle permet un nombre de réindexages plus important que dans le cas des plaquettes à arêtes de coupe carrées, rhombiques ou triangulaires, qui ne peuvent être réindexées que quatre, respectivement trois fois, selon le nombre de côtés; le réindexage est aisément réalisé par pivotement de la plaquette autour de son axe pour mettre en position de travail une portion de l'arête circulaire non encore usée. Une plaquette à arête de coupe circulaire est donc plus économique à l'usage.

En plus des avantages mentionnés ci-dessus dus à la combinaison d'au moins une plaquette à arête de coupe circulaire et d'une ou plusieurs plaquettes à arête de coupe rhombique ou d'une autre forme, le foret selon l'invention présente d'autres avantages dans le cas de la variante comportant une cartouche interchangeable formée d'un support amovible et d'une plaquette de coupe amovible.

Grâce à la présence de ce support amovible, il est en effet possible de monter sur le même corps de foret soit des plaquettes de dimensions différentes, soit des plaquettes identiques mais avec des orientations légèrement différentes sur leur support interchangeable, soit encore des supports interchangeables de dimensions extérieures légèrement différentes (déport de la plaquette de coupe plus ou moins important). Ceci permet en conséquence d'utiliser le même corps de foret pour le perçage de trous de dimensions légèrement différentes par exemple 20, 21 et 22 mm. Cette nouvelle conception est donc également plus économique.

En outre, le positionnement de la cartouche interchangeable et par là de la plaquette de coupe, est sûr et précis, grâce aux flancs non perpendiculaires à la face d'appui du support coopérant avec les parois latérales du logement de même inclinaison que lesdits flancs; en effet, grâce à cette disposition, lorsque l'outil est en travail, les efforts de coupe ont pour effet de coincer la cartouche dans son logement. Ainsi une seule vis est nécessaire, de faible section, pour le maintien en position de service de la cartouche.

Enfin, en cas de dégâts accidentels à la plaquette de coupe, le corps du foret est protégé indirectement, puisque seul le support amovible risque d'être endommagé; le travail peut donc être immédiatement poursuivi, avec le même corps de foret, après un simple et rapide changement de cartouche.

**Revendications**

1. Foret comportant au moins deux plaquettes de coupe (4, 5) fixées de façon amovible dans des logements pratiqués à son extrémité, les arêtes de coupe de ces plaquettes débouchant dans des gorges (2, 3) pratiquées dans le corps (1) du foret et chacune desdites arêtes de coupe assurant, lors de la révolution de la pièce à usiner ou du foret, une partie de la surface totale de coupe de celui-ci, et une des plaquettes présentant une arête de coupe de forme circulaire (4) dont au moins un point est situé sur l'axe longitudinal du foret, caractérisé par le fait qu'au moins une plaquette (5) présente une forme différente de celle des autres plaquettes.

2. Foret selon la revendication 1, caractérisé par le fait que ladite arête de coupe circulaire (4) est disposée radialement et comprend deux points d'intersection avec l'axe longitudinal du foret.

3. Foret selon la revendication 2, caractérisé par le fait qu'il comporte deux plaquettes amovibles, la première présentant une arête de coupe de forme circulaire (4) et la seconde présentant une arête de coupe de forme rhombique (5).

4. Foret selon la revendication 3, caractérisé par le fait que l'arête de coupe rhombique (5) est située dans un plan parallèle au plan longitudinal (I) contenant l'arête de coupe circulaire (4).

5. Foret selon la revendication 1 ou la revendication 2, caractérisé par le fait qu'il comporte trois plaquettes amovibles, par le fait que deux plaquettes présentent chacune une arête de coupe de forme circulaire située radialement dans un plan longitudinal, les deux plans faisant un angle entre eux, et par le fait qu'une troisieme plaquette présente une arête de coupe de forme rhombique située dans un plan parallèle à un plan longitudinal faisant un angle avec chacun des deux autres plans longitudinaux, et par le fait que les deux arêtes de coupe circulaires assurent respectivement la partie interne et la partie médiane de la surface de coupe totale, et que l'arête de coupe rhombique en assure la partie externe.

6. Foret selon l'une des revendications 1 à 5, caractérisé par le fait qu'il comporte un canal (8) percé dans le corps (1) du foret et selon l'axe longitudinal de celui-ci, ce canal débouchant à proximité des plaquettes de coupe amovibles et étant destiné au passage d'un liquide de refroidissement et de lubrification.

7. Foret selon l'une des revendications 1 à 5, caractérisé par le fait que les plaquettes de coupe amovibles sont munies chacune d'une brise-copeaux.

8. Foret selon l'une des revendications 1 à 5, caractérisé par le fait que chaque plaquette amovible est percée d'un orifice central destiné à recevoir une vis de fixation (6, 7).

9. Foret selon l'une des revendications 1 à 8, caractérisé par le fait qu'au moins une des plaquettes à arête de coupe non circulaire (5) est fixée de façon amovible sur un support (9) lui-même fixé de façon amovible dans un desdits logements, cette plaquette et ce support formant une cartouche interchangeable.

10. Foret selon la revendication 9, caractérisé par le fait que le support présente des flancs faisant un angle inférieur à 90° avec la face d'appui du support destinée à être en contact avec le fond du logement dans lequel il est fixé de façon amovible, par le fait que les parois latérales (11) de ce logement font avec le fond de celui-ci un angle correspondant à celui des flancs du support, et par le fait que le support (9) est percé d'un orifice destiné à recevoir une vis de fixation (10), cette vis coopérant en position de service avec un taraudage pratiqué dans le corps du foret, de telle sorte que dans cette position de service vissée les flancs du support (9) soient appuyés contre les parois latérales (11) du logement afin de bloquer dans celui-ci ledit support.

**Patentansprüche**

1. Bohrer mit wenigstens zwei Schneidplättchen (4, 5), die in Sitzen am Ende des Bohrers abnehmbar befestigt sind, wobei die Schneiden der Schneidplättchen in im Schaft (1) des Bohrers ausgebildeten Nuten (2, 3) enden und während der Umdrehung des zu bearbeitenden Teils oder des Bohrers jeweils einen Teil der gesamten Schnittflächen erzeugen, und ein Schneidplättchen eine kreisförmige Schneide (4) hat, von der sich wenigstens ein Punkt auf der Längsachse des Bohrers befindet, dadurch gekennzeichnet, dass wenigstens ein Schneidplättchen (5) eine von den anderen Schneidplättchen abweichende Form hat.

2. Bohrer nach Anspruch 1, dadurch gekennzeichnet, dass die kreisförmige Schneide (4) radial angeordnet ist und mit der Längsachse des Bohrers zwei Schnittpunkte hat.

3. Bohrer nach Anspruch 2 gekennzeichnet durch zwei abnehmbare Schneidplättchen, von denen das erste eine kreisförmige (4) und das zweite eine rautenförmige Schneide (5) hat.

4. Bohrer nach Anspruch 3, dadurch gekennzeichnet, dass die rautenförmige Schneide (5) sich in einer Ebene befindet, die zu der die kreisförmige Schneide (4) enthaltenden Längsebene (I) parallel ist.

5. Bohrer nach Anspruch 1 oder 2, dadurch gekennzeichnet, dass der Bohrer drei abnehmbare Schneidplättchen hat, dass jeweils zwei Schneidplättchen eine radial in einer Längsebene gelegene kreisförmige Schneide haben, wobei die beiden Längsebenen einen Winkel einschliessen, dass das dritte Schneidplättchen eine rautenförmige Schneide hat, die in einer zur Längsebene parallelen Ebene liegt, die mit jeder der beiden anderen Längsebenen einen Winkel einschliesst, und dass die beiden kreisförmigen Schneiden den inneren bzw. mittleren Teil der gesamten Schnittfläche erzeugen, während die rautenförmige Schneide den äusseren Teil erzeugt.

6. Bohrer nach einem der Ansprüche 1 bis 5, gekennzeichnet durch einen in des Schaft (1) des Bohrers in dessen Längsrichtung gebohrten Kanal (8), der in Nähe der abnehmbaren Schneidplättchen mündet und für den Durchtritt einen Kühl- und Schmierfluids bestimmt ist.

7. Bohrer nach einem der Ansprüche 1 bis 5, dadurch gekennzeichnet, dass die abnehmbaren Schneidplättchen jeweils mit einem Spanbrecher versehen sind.

8. Bohrer nach einem der Ansprüche 1 bis 5, dadurch gekennzeichnet, dass jedes abnehmbare Schneidplättchen mit einer zentralen Öffnung zur Aufnahme einer Befestigungsschraube (6, 7) durchbohrt ist.

9. Bohrer nach einem der Ansprüche 1 bis 8, dadurch gekennzeichnet, dass wenigstens eines der Schneidplättchen mit nicht kreisförmiger Schneide (5) an einem Halter (9) abnehmbar befestigt ist, der in einem der Sitze abnehmbar befestigt ist, und dass der Halter einen austauschbaren Einsatz bildet.

10. Bohrer nach Anspruch 9, dadurch gekennzeichnet, dass der Halter Flanken aufweist, die einen Winkel von weniger als 90° mit der Auflagefläche des Halters einschliesst, die in Berührung mit dem Grund des Sitzes stehen soll, in dem der Halter abnehmbar befestift ist, dass die Seitenwände (11) des Sitzes mit dessen Grund einen Winkel einschliessen, der demjenigen der Flanken des Halters entspricht, und dass der Halter (9) von einer Öffnung durchbrochen ist, die zur Aufnahme einer Befestigungsschraube (10) bestimmt ist, die in Betriebsstellung mit einem Gewinde im Schaft des Bohrers derart zusammenarbeitet, dass in dieser verschraubten Betriebsstellung die Flanken des Halters an den Seitenwänden (11) des Sitzes anliegen, damit der Halter im Sitz festgelegt ist.

**Claims**

1. Drill comprising at least two cutting inserts (4, 5), which are removably fixed in housings provided at its end, the cutting edges of said inserts emerging in grooves (2, 3) provided in the body (1) of the drill and each of said cutting edges ensuring, during the revolution of the piece to be machined or of the drill, a part of the whole cutting surface thereof, and one of the inserts presenting a cutting edge with a circular shape (4), at least a point thereof being located on the longitudinal axis of the drill, characterized by the fact that at least one insert (5) presents a shape which is different from that of the other inserts.

2. Drill according to claim 1, characterized by the fact that said circular shaped cutting edge (4) is radially located and comprises two intersecting points with the longitudinal axis of the drill.

3. Drill according to claim 2, characterized by the fact that it comprises two removable inserts, the first one presenting a circular shaped cutting edge (4) and the second one presenting a rhombical shaped cutting edge (5).

4. Drill according to claim 3, characterized by the fact that the rhombical shaped cutting edge (5) is located in a plan which is parallel to the longitudinal plan (I) containing the circular shaped cutting edge (4).

5. Drill according to claim 1 or claim 2, characterized by the fact that it comprises three removable inserts, by the fact that two inserts present each a circular shaped cutting edge located radially in a longitudinal plan, both plans defining an angle between them, and by the fact that a third insert presents a rhombical shaped cutting edge located in a plan which is parallel to a longitudinal plan making an angle with each of the two other longitudinal plans, and by the fact that both circular shaped cutting edges ensure the internal respectively the median part of the whole cutting surface, and that the rhombical shaped cutting edge ensures the external part thereof.

6. Drill according to any one of claims 1 to 5, characterized by the fact that it comprises a canal (8) bored in the body (1) of the drill and according to the longitudinal axis thereof, this canal emerging near the removable cutting inserts and being intended for the passage of a cooling or lubricating liquid.

7. Drill according to any one of claims 1 to 5, characterized by the fact that the removable cutting inserts are each provided with a chips breaker.

8. Drill according to any one of claims 1 to 5, characterized by the fact that each removable insert is pierced with a central opening intended to receive a fixing screw (6, 7).

9. Drill according to any one of claims 1 to 8, characterized by the fact that at least one of the inserts with a non-circular shaped cutting edge (5) is removably fixed on a holder (9) which is removably fixed in said housings, said insert and said holder constituting an interchangeable cartridge.

10. Drill according to claim 9, characterized by the fact that the holder presents flanges defining an angle which is less than 90° with the bearing face of said holder intended to be in contact with the bottom of the housing in which it is removably fixed, by the fact that the lateral walls (11) of this housing define with the bottom thereof an angle corresponding to that of the flanges of the holder, and by the fact that the holder (9) is pierced with a hole intended to receive a fixing screw (10), this screw cooperating in service position with a thread provided in the body of the drill, in such a manner that in said service screwed position the flanges of the holder (9) are bearing against the lateral walls (11) of the housing so as to lock said holder therein.

0 007 512

FIG.5

FIG.3

FIG.4

FIG.1

FIG.2

FIG.8

FIG.6

FIG.7